# EUROPEAN PATENT APPLICATION

(11) **EP 4 516 377 A1**
(43) Date of publication of application: **05.03.2025**
(21) Application number: 24198062.2
(22) Date of filing: 03.09.2024
(51) Int. Cl.: B01D 33/46, A47L 15/42, D06F 39/10

(54) **MICROPLASTIC FILTERING SYSTEM FOR A HOUSEHOLD APPLIANCE, IN PARTICULAR A WASHING MACHINE, SUCH AS A LAUNDRY WASHING MACHINE, SAID SYSTEM BEING PROVIDED WITH A DRAINING PUMP**

(30) Priority: 04.09.2023 IT 202300018114
(71) Applicant: ELBI International S.p.A., 10129 Torino (IT)
(72) Inventor: BECCHIO, Marco, 10041 CARIGNANO (TO) (IT); BENEDETTO, Gianluca, 10129 Torino (IT); GARETTO, Luca, 10129 Torino (IT); MAIORANA, Luca, 10129 Torino (IT)
(74) Representative: Vitillo, Giuseppe

(57) **Abstract**

The system **(10)** comprises a casing **(12)** internally defining a cavity **(14)** and comprising, in turn, an inlet **(16)** configured to receive a fluid that contains microplastics and leading into the cavity **(14),** and an outlet **(18)** configured to deliver the fluid contained in the cavity **(14),** from which the microplastics have been substantially removed. A filtering assembly **(100)** contained in the cavity **(14)** is configured to be crossed by the fluid entering the casing **(12)** through the inlet **(16)** and exiting through the outlet **(18),** thus internally trapping the microplastics. A compacting assembly **(200)** is situated in the cavity **(14)** and configured for collecting and compacting the microplastics trapped by the filtering assembly **(100).** A driving assembly **(300)** is configured to drive the compacting assembly **(200).** A storing container **(20)** is housed in a storing chamber **(14c)** defined by the cavity **(14)** and facing towards the compacting assembly **(200),** and is configured to store the microplastics collected and compacted by the compacting assembly **(200).** A draining pump **(400)** is configured for taking in the liquid contained in the storing chamber **(14c)** and pushing the liquid out of the casing **(12).**

## Description

### Technical field

The present invention relates to a microplastic filtering system for a household appliance, in particular a washing machine, such as a laundry washing machine.

### Technical background

Microplastic filtering systems for household appliances, in particular for washing machines, such as laundry washing machines, are known in the art.

In recent years, the use of synthetic fabrics has increased, resulting in larger amounts of micrometric synthetic microfibres contained in wastewater and hence in the environment, leading to more environmental pollution. In particular, when synthetic fabrics are washed, synthetic microfibres are produced/released which are not biodegradable, thus causing increased water pollution from microplastics (this term refers to particles and/or fibres less than 5 mm in length).

Patent publication EP 4 148 178 Al by the present Applicant describes a microplastic filtering system specifically intended for use in a laundry washing machine. The system can filter microplastics contained in the washing liquid, which is then drained from the washing tub. Although such system is particularly advantageous and effective in comparison with those previously known in the art, it is nonetheless desirable to add thereto some improvements and refinements.

One drawback of the system disclosed by patent publication EP 4 148 178 Al lies in the fact that, in such a system, liquid tends to accumulate in the storing container which is intended to contain microplastics. This implies the risk that the storing container might become full too soon, thus preventing the compacting assembly from operating correctly and reducing, therefore, the effectiveness of the filtering assembly.

### Summary of the invention

It is one object of the present invention to provide a microplastic filtering system for a household appliance, in particular for a washing machine, such as a laundry washing machine, wherein such system can remedy one or more drawbacks of the prior art.

In particular, compared with the prior art, the system made in accordance with the present invention can solve the technical problem of improving the filtering effectiveness. In this regard, the action of the draining pump, which is configured for taking in the liquid from the storing chamber where the storing container is housed, improves the action of the compacting assembly, since any stagnating liquid is drained from the storing container. This results in increased effectiveness of the filtering assembly.

According to the present invention, this and other objects are achieved through a system having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure **1** is a schematic block view representing a household appliance, in particular a washing machine, such as a laundry washing machine, in which a filtering system made in accordance with an illustrative embodiment of the present invention has been installed.
Figure **2** is a two-dimensional axial sectional view of the system shown in Figure **1****.**
Figure **3** is an exploded perspective view of the system shown in the preceding Figures.

For completeness' sake, the following is a list of alphanumerical references and names used herein to identify parts, elements and components illustrated in the above-summarized drawings.
- **WM.**: Laundry washing machine
- **C.**: Cabinet
- **T.**: Washing Tub
- **D.**: Discharge piping
- **D1.**: Initial duct
- **D2.**: Terminal duct
- **WS.**: Waste system
- **DP.**: Discharge pump
- **PF.**: Discharge pump filter
- **L.**: Stagnating liquid
- **RD.**: Return duct
- **X-X.**: Longitudinal axis
- **10.**: Filtering system
- **12.**: Casing
- **14.**: Cavity
- **14a.**: Central chamber
- **14b.**: Peripheral chamber
- **14c.**: Storing chamber
- **16.**: Inlet
- **18.**: Outlet
- **20.**: Storing container
- **21.**: Clamping ring
- **22.**: Tubular portion
- **24.**: Cover member
- **26.**: Closure member
- **28.**: Draining duct
- **29.**: Spacer
- **30.**: Sealing gaskets
- **100.**: Filtering assembly
- **102.**: Hollow filtering body
- **104.**: Axial through aperture
- **106.**: Support shell
- **108.**: Lateral slots
- **200.**: Compacting assembly
- **202.**: Endless screw
- **204.**: Helicoidal profile
- **300.**: Driving assembly
- **302.**: Electric motor
- **303.**: Reduction gear train
- **304.**: Shaft
- **400.**: Draining pump
- **402.**: Rotor
- **404.**: Tube
- **406.**: Inlet opening
- **408.**: Outlet opening
- **410.**: Elbow connection

### Detailed description of the invention

With reference to the annexed drawings, numeral **10** designates as a whole a microplastic filtering system made in accordance with an illustrative embodiment of the present invention. System **10** is applicable to a household appliance, in particular to a washing machine. The term "microplastics" refers to particles and/or fibres of synthetic or plastic material which are less than 5 mm in length, and which, in particular, may also have micrometric dimensions.

In the embodiment illustrated herein, system **10** will be described with particular reference to a laundry washing machine **WM.**

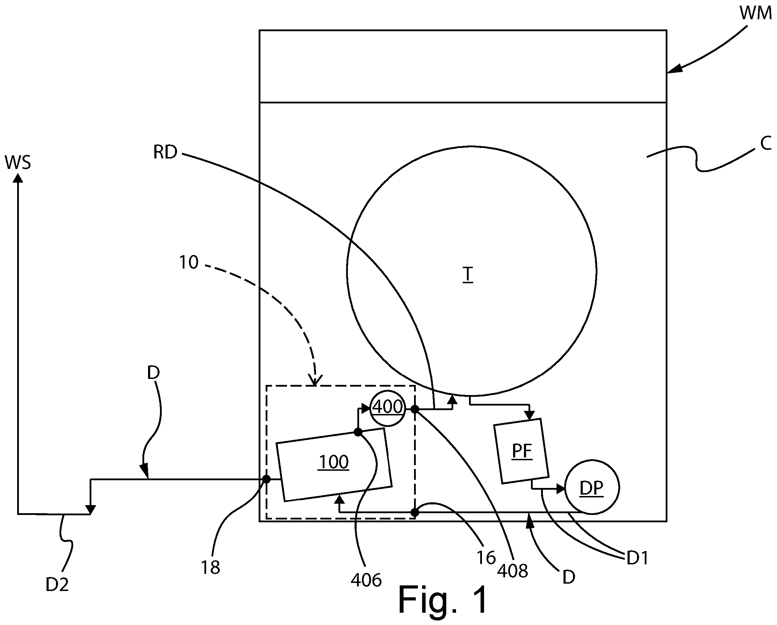

With particular reference to Figure 1, laundry washing machine **WM** comprises a cabinet **C** in which a washing tub **T** is defined, which is sealed from the outside environment by a door (not shown). Laundry washing machine **WM** comprises also, in a per se known manner, a basket (not shown) rotatably mounted in washing tub **T.**

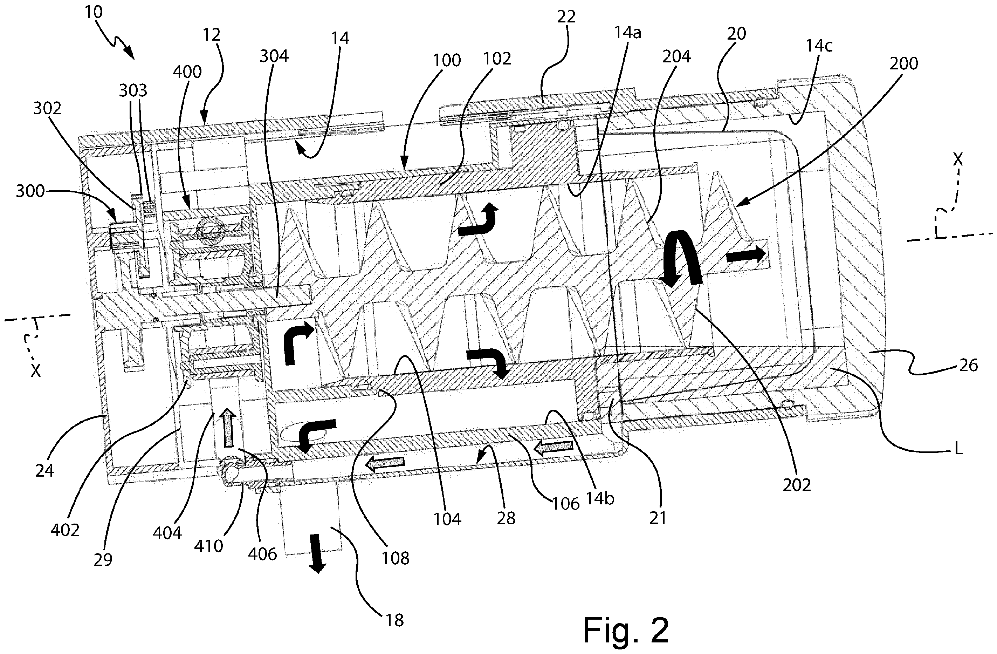

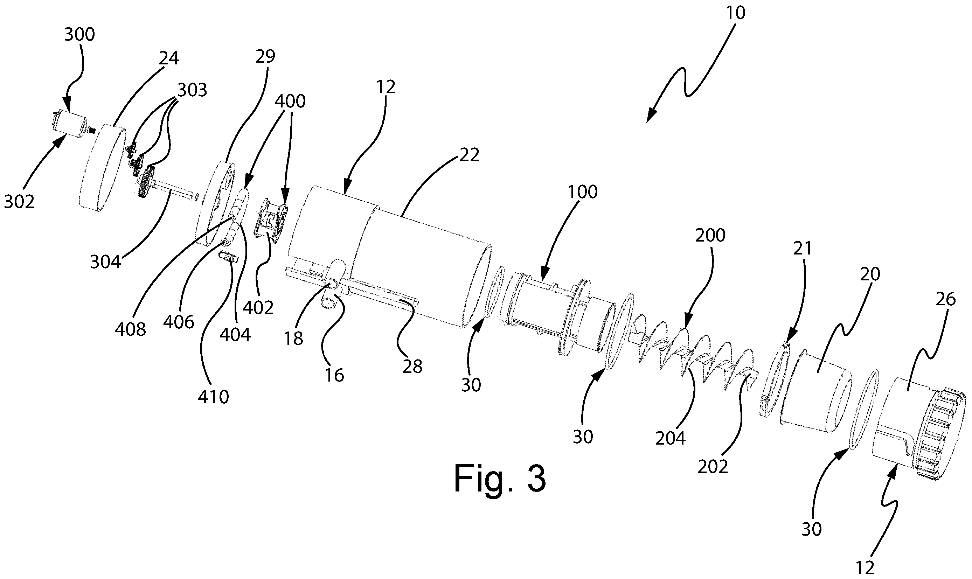

As will be further described below also with reference to Figures 2 and 3, system **10** comprises a casing **12** internally defining a cavity **14** (details thereof are visible in Figure 2). Casing **12** has a substantially tubular shape and develops along a longitudinal axis **X-X.**

In the embodiment described herein, terms or expressions such as "axial" or "axially", "transversal" or "transversally", "radial" or "radially", "lateral" or "laterally", "internal" or "internally", "external" or "externally", "annular" or "annularly", "peripheral" or "peripherally" are meant to refer to longitudinal axis **X-X.**

Furthermore, casing **12** comprises an inlet **16** configured to receive a fluid that contains microplastics and leading into cavity **14.** Casing **12** comprises also an outlet **18** configured to deliver the fluid contained in cavity **14,** from which microplastics have been substantially removed. In the embodiment shown in Figure 1, system **10** is fluidically mounted to a discharge piping, designated as a whole as **D,** of laundry washing machine **WM.** Discharge piping **D** is fluidically connected to washing tub **T** on one side and connectable to a waste system **WS** on the other side. In particular, discharge piping **D** comprises an initial duct **D1** fluidically connected to washing tub **T** on one side and to inlet **16** of system **10** on the other side; discharge piping **D** comprises also a terminal duct **D2,** in turn fluidically connected to outlet **18** of system **10** and fluidically connectable to the waste system. Therefore, the "dirty" washing liquid, which contains microplastics, coming from washing tub **T** flows in initial duct **D1,** while the "filtered" washing liquid, substantially free from such microplastics, flows in terminal duct **D2.**

Furthermore, in the embodiment illustrated herein, washing machine **WM** comprises a discharge pump **DP** situated in initial duct **D1** and fluidically connected downstream of washing tub **T** and upstream of inlet **16** of system **10.** Discharge pump **DP** is configured to push the washing liquid, containing microplastics and coming from washing tub **T,** towards inlet **16** of system **10.** Washing machine **WM** comprises also a discharge pump filter **PF** situated in initial duct **D1** and fluidically connected downstream of washing tub **T** and upstream of discharge pump **DP.** Discharge pump filter **PF** is configured to filter the washing liquid, containing microplastic and coming from washing tub **T,** before it enters discharge pump **DP.** Therefore, discharge pump filter **PF** and discharge pump **DP** are fluidically connected in series in initial duct **D1.**

In the embodiment illustrated herein, casing **12** comprises a tubular portion **22,** a cover member **24** and a closure member **26** sealingly connected to tubular portion **22** on opposite sides, thereby internally defining cavity **14.** In particular, cavity **14** is laterally delimited by tubular portion **22** and axially delimited, on opposite sides, by cover member **24** and closure member **26.** Tubular portion **22** develops around longitudinal axis **X-X.**

As will be described in more detail below, inlet **16** and outlet **18** lead into chamber **14** through casing **12** in a substantially transversal direction (i.e. substantially perpendicular to longitudinal axis **X-X**). In the embodiment illustrated herein, inlet **16** and outlet **18** are formed laterally on casing **12,** i.e. with axes oriented transversally to longitudinal axis **X-X.** In more detail, inlet **16** and outlet **18** are formed on tubular portion **22.** In the embodiment illustrated herein, inlet **16** and outlet **18** are provided as fittings laterally protruding from casing **12,** in particular from tubular portion **22.**

System **10** further comprises a filtering assembly **100** contained in cavity **14.** Filtering assembly **100** is configured to be crossed by the fluid entering casing **12** through inlet **16** and exiting through outlet **18,** thus internally trapping the microplastics contained in said fluid. In particular, filtering assembly **100** is, in a per se known manner, configured for trapping particles and/or fibres of synthetic or plastic material less than 5 mm in length, which may also, in particular, have micrometric dimensions.

System **10** comprises also a compacting assembly **200** situated in cavity **14** and configured for collecting and compacting the microparticles trapped by filtering assembly **100.**

In addition, system **10** comprises a driving assembly **300** configured to drive compacting assembly **200.** Preferably, driving assembly **300** comprises a motor, in particular an electric motor **302.** In the illustrated embodiment, electric motor **302** co-operates with a reduction gear train **303** to drive compacting assembly **200.** In particular, driving assembly **300** is housed in cover member **24.**

Preferably, filtering assembly **100** comprises a hollow filtering body **102** having an axial through aperture **104.** Hollow filtering body **102** comprises, advantageously, a plurality of concentrical cylindrical filtering layers of different mesh gauges suitable for trapping microplastic particles of different sizes. In the embodiment illustrated herein, filtering assembly **100** comprises a support shell **106,** in which hollow filtering body **102** is mounted. In addition, support shell **106** has a plurality of lateral apertures or slots **108** (only one of which is numbered in Figure **2**) forming a "cage" that laterally supports hollow filtering body **102** and allows fluid to flow therethrough. In the embodiment illustrated herein, filtering assembly **100** is removable from casing **12.**

Preferably, as will be described hereafter, compacting assembly **200** extends axially through filtering assembly **100.** In particular, axial through aperture **104** of hollow filtering body **102** is crossed by compacting assembly **200.**

In the embodiment illustrated herein, compacting assembly **200** is configured to remove microplastics from the inner surface of hollow filtering body **102,** in particular conveying them out of filtering assembly **100.** In other words, compacting assembly **200** is operatively mounted in contact with the inner lateral surface of hollow filtering body **102,** defined by axial through aperture **104,** for removing microplastics from the filtering assembly. In this manner, compacting assembly **200** is configured to operatively slide against said inner lateral surface of hollow filtering body **102,** thereby removing microplastics from such surface.

In the illustrated embodiment, compacting assembly **200** comprises an endless screw **202** configured to be rotatably driven by driving assembly **300,** so as to axially push the solid particles trapped by filtering assembly **100.**

In addition, endless screw **202** is housed in axial through aperture **104** of hollow body **102,** and is substantially aligned axially with longitudinal axis **X-X.**

In particular, endless screw **202** has a helicoidal profile **204** that, in a per se known manner, facilitates the conveyance of microplastics out of filtering assembly **100.** In other words, helicoidal profile **204** is operatively mounted in contact with the inner lateral surface of hollow filtering body **102.** In this way, helicoidal profile **204** - rotatably driven by driving assembly **300** - can effectively remove the microplastics deposited on said surface of hollow filtering body **102.** In fact, helicoidal profile **204** is configured to rotatably slide against said surface of hollow filtering body **100,** thereby removing microplastics therefrom.

As clearly visible in Figure 2, cavity **14** is divided into a plurality of chambers **14a, 14b, 14c,** in particular by inner walls of casing **12** and/or outer walls of filtering assembly **100,** in particular of support shell **106.** There is a central chamber **14a,** laterally and axially delimited within filtering assembly **100,** into which inlet **16** directly leads; central chamber **14a** is axially crossed by compacting assembly **200** (in particular, by endless screw **202**). In particular, central chamber **14a** is also delimited laterally within hollow filtering body **102** and axially by an axial end of support shell **106.** There is also a peripheral chamber **14b** situated around central chamber **14a** and bordering thereon via the walls of hollow filtering body **102,** while it is delimited axially by an axial end of support shell **106;** outlet **18** extends from peripheral chamber. Lastly, there is a storing chamber **14c** facing towards compacting assembly **12** (in particular, facing towards a free end of endless screw **202**). In addition, storing chamber **14c** is adjacent, in the axial direction, to central chamber **14a** and in direct fluidic communication with such central chamber **14a;** said storing chamber **14c** is laterally and axially delimited by casing **12,** in particular by closure member **26.**

System **10** further comprises a storing container **20** situated in storing chamber **14c** and facing towards compacting assembly **200.** Storing container **20** is configured to receive the microplastics collected and compacted by compacting assembly **200.** Particularly, storing container **20** is removable from cavity **14** and accessible through casing **12.**

In the embodiment illustrated herein, storing container **20** is housed in closure member **26,** which internally defines storing chamber **14c.** In particular, storing container **20** is substantially cup-shaped, and closure member **26** is substantially glass-shaped. In particular, storing container **20** and closure member **26** are mutually assembled by means of a clamping ring **21,** wherein a peripheral edge of storing container **20** is axially locked between clamping ring **21** and a corresponding peripheral edge of closure member **26.** In addition, axial through aperture **104** of hollow body **102** faces towards storing container **20.** Closure member **26** is mounted to tubular portion **22** and removable, in particular repeatably and reversibly, therefrom. For example, closure member **26** can be coupled to and, respectively, decoupled from tubular portion **22,** so that a user can gain access to the inside of casing **12.** Particularly, a bayonet mechanism or a threaded connection may be provided for removably coupling closure member **26** to tubular portion **22.** Therefore, by removing closure member **26** from tubular portion **22** it is possible to remove and/or replace storing container **20** from casing **12** in order to empty it of the microplastics accumulated therein and compacted by compacting assembly **200.**

System **10** further comprises a draining pump **400** configured for taking in liquid contained in storing chamber **14c** and pushing such liquid out of casing **12.** Thanks to such technical features, liquid **L** is prevented from stagnating in the storing container and interfering with the normal operation of compacting assembly **200,** with the risk of clogging filtering assembly **100** - particularly when system **10** is installed in laundry washing machine **WM** with longitudinal axis **X-X** oriented in a substantially horizontal direction (e.g. according to the arrangement shown in Figure 2). This increases the general filtering effectiveness of system **10.**

In the system arrangement shown in Figure 1, longitudinal axis **X-X** is oriented in a substantially horizontal direction, with such an inclination that storing chamber **12c** and storing container **20** are in a higher position than filtering assembly **100** and compacting assembly **200.** This facilitates the outflow of the washing liquid from central chamber **14a** towards peripheral chamber **14b.**

Preferably, draining pump **400** is of the peristaltic type. In particular, draining pump **400** comprises, in a per se known manner, a rotor **402** and an elastically deformable tube **404,** having an inlet opening **406** and an outlet opening **408** (only visible in Figure 3). Rotor **402** is configured to co-operate with respective tube **404** to push stagnating liquid **L** contained in corresponding storing chamber **14c.** Also, rotor **402** comprises a pair of projecting portions (not numbered), preferably situated on diametrically opposite sides, adapted to be placed in contact with the deformable walls of tube **404.** In particular, such projecting portions are adapted to locally throttle tube **404** and cause the liquid contained in the latter to flow on during the rotation of rotor **402.** Preferably, each one of the projecting portions comprises a peripheral roller adapted to locally press on tube **404** in order to throttle it.

In the embodiment illustrated herein, tube **404** is mounted in such a way that its outlet opening **408** leads out of system **10,** particularly out of casing **12,** so as to discharge in washing tub **T** any washing liquid **L** stagnating in storing chamber **14c.** In particular, as shown in Figure 1, laundry washing machine **WM** comprises a return duct **RD** hydraulically connected to outlet opening **408** on one side and to an inlet of washing tub **T** on the other side.

Preferably, casing **12** defines a draining duct **28** fluidically connected to storing chamber **14c** on one side and to the inlet of draining pump **400** on the other side - in particular, to inlet opening **406.** In the embodiment illustrated herein, the hydraulic connection of draining duct **28** is provided by means of an elbow connection **410** hydraulically connected to inlet opening **406** on one side and to one end of draining duct **28** on the other side.

Preferably, draining duct **28** is defined on the periphery of casing **12** (e.g. of the latter's tubular portion **22**).

In the embodiment illustrated herein, draining duct **28** extends along casing **12** (in particular, along tubular portion **22**) in a substantially axial direction.

In the embodiment illustrated herein, draining duct **28** is defined by an interspace laterally delimited between casing **12** (in particular, the latter's tubular portion **22**) and filtering assembly **100** (in particular, the latter's support shell **106**).

Preferably, draining pump **400** is supported between casing **12** (in particular, cover member **24**) and filtering assembly **100** (in particular, an axial end of support shell **106**). In addition, electric motor **302** and reduction gear train **303** are sealingly separated from draining pump **400** through the interposition of a spacer **29.**

Driving assembly **300** comprises a shaft **304** configured to be rotatably driven by electric motor **302,** in particular via reduction gear train **303,** for controlling compacting assembly **200.** In particular, shaft **304** extends in cavity **14** in order to co-operate with compacting assembly **200.** In the illustrated embodiment, shaft **304** is coupled to endless screw **202** to control the rotation thereof, such two parts being, in particular, rotatably integral (e.g. keyed with each other). In more detail, shaft **304** and endless screw **202** are substantially coaxial to each other and to longitudinal axis **X-X.**

Preferably, driving assembly **300** is also configured to control draining pump **400.** Thus, when system **10** is in operation, driving assembly **300** provides not only the action of compacting the microplastics towards storing container **20,** but also the action of draining any liquid stagnating in storing chamber **14c.**

In the embodiment illustrated herein, shaft **304** is controllable in rotation and mounted coaxial to both rotor **402** and endless screw **202.** In particular, shaft **304** is rotatably supported by casing **12** (in particular, by cover member **24** and/or spacer **29**) on one side and, on the axially opposite side, by filtering assembly **100** (in particular, by support shell **106,** e.g. by the top thereof). Particularly, shaft **304** axially and sealingly crosses spacer **29** to connect to rotor **402** and endless screw **202.**

By way of example, fluid-tightness of casing **12** is obtained by means of a plurality of sealing gaskets **30** interposed between members **24** and **26** and tubular portion **22.** In particular, sealing gaskets **30** have a substantially annular shape, e.g. they are O-rings.

For completeness' sake, the following will briefly describe the path followed by the washing liquid in system **10,** from washing tub **T** to waste system **WS.**

When system **10** is in operation, inlet **16,** which is hydraulically connected to initial duct **D1** of discharge piping **D,** is configured to receive, substantially in a transversal or radial direction, the microplastic-containing washing liquid delivered by pump **DP.** Subsequently, inlet **16** extends transversally or radially through tubular portion **22** of casing **12** and leads into central chamber **14a** defined in filtering assembly **100** by hollow filtering body **102.**

Central chamber **14a** receives the microplastic-containing washing liquid and hydraulically communicates, transversally or radially, with peripheral chamber **14b** through the sidewalls of hollow filtering body **102.** In particular, in the substantially horizontal arrangement of system **10** shown in Figure 2, the washing liquid flows from central chamber **14a** to peripheral chamber **14b** also by gravity, since peripheral chamber **14b** is underneath. Therefore, central chamber **14a** retains the microplastics within hollow filtering body **102,** so that peripheral chamber **14b** receives washing liquid which is substantially free from microplastics.

At the same time, central chamber **14a** hydraulically communicates, in the axial direction, with storing chamber **14c,** which, due to the action of compacting assembly **200,** receives the microplastics retained within the hollow filtering body, and traps them in the storing container **20.**

Subsequently, the washing liquid, from which microplastics have been substantially removed, flows out of peripheral chamber **14b,** transversally or radially, through outlet **18** to exit tubular portion **22** of casing **12.** Outlet **18** is connected to terminal duct **D2** of discharge piping **D,** thus delivering to waste system **WS** washing liquid which is substantially free from microplastics.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Microplastic filtering system for a household appliance, in particular a washing machine, such as a laundry washing machine; said system comprising:
- a casing (**12**) internally defining a cavity (**14**) and comprising
an inlet (**16**) configured to receive a fluid that contains microplastics and leading into the cavity (**14**), and
an outlet (**18**) configured to deliver said fluid contained in said cavity (**14**), from which said microplastics have been substantially removed;
- a filtering assembly (**100**) contained in the cavity (**14**) and configured to be crossed by the fluid entering said casing (**12**) through the inlet (**16**) and exiting through said outlet (**18**), thus internally trapping said microplastics;
- a compacting assembly (**200**) situated in said cavity (**14**) and configured for collecting and compacting the microplastics trapped by the filtering assembly (**100**);
- a storing container (**20**) housed in a storing chamber (**14c**) defined by the cavity (**14**) and facing towards said compacting assembly (**200**), and configured to store the microplastics collected and compacted by said compacting assembly (**200**);
said filtering system being **characterized in that** it further comprises a draining pump (**400**) configured for taking in liquid (**L**) contained in said storing chamber (**14c**) and pushing said liquid out of said casing (**12**).

2. System according to claim **1,** wherein said draining pump (**400**) is of the peristaltic type.

3. System according to claim **1** or **2,** wherein said casing (**12**) defines a draining duct (**28**) fluidically communicating with said storing chamber (**14c**) on one side and with the inlet of said draining pump (**400**) on the other side.

4. System according to claim **3,** wherein the draining duct (**28**) is defined on the periphery of said casing (**12**).

5. System according to claim **3** or **4,** wherein said draining duct (**28**) extends along said casing (**12**) in a substantially axial direction.

6. System according to any one of claims **3** to **5,** wherein said draining duct (**28**) is defined by an interspace laterally delimited between said casing (**12**) and said filtering assembly (**100**).

7. System according to any one of the preceding claims, wherein said draining pump (**400**) is supported between said casing (**12**) and said filtering assembly (**100**).

8. System according to any one of the preceding claims, comprising a driving assembly (**300**) configured to drive the compacting assembly (**200**).

9. System according to claim **8,** wherein said driving assembly (**300**) is also configured to drive said draining pump (**400**).

10. System according to claim **9,** wherein said driving assembly (**300**) comprises a shaft (**304**) controllable in rotation and mounted coaxial to both a rotor (**402**) of said draining pump (**400**) and an endless screw (**202**) of said compacting assembly (**200**).

11. System according to any one of the preceding claims, wherein said storing container (**20**) is removable from the cavity (**14**) and accessible through the casing (**12**).
